# EUROPEAN PATENT SPECIFICATION

(11) **EP 1 349 766 B1**
(45) Date of publication and mention of the grant of the patent: **29.06.2005**
(21) Application number: 01270450.8
(22) Date of filing: 12.12.2001
(51) Int. Cl.: B62D 21/02, B60P 7/12, B62D 21/09, B62D 27/06, B62D 33/08

(54) **ARRANGEMENT FOR CONNECTING VEHICLE CHASSIS BEAMS**
ANORDNUNG ZUR VERBINDUNG VON RAHMENLÄNGSTRÄGERN
AGENCEMENT DE LIAISON DES LONGERONS DU CHASSIS D'UN VEHICULE

(30) Priority: 12.12.2000 FI 20002721
(43) Date of publication of application: 08.10.2003
(73) Proprietor: Kulojärvi, Tauno, 33250 Tampere (FI)
(72) Inventor: Kulojärvi, Tauno, 33250 Tampere (FI)
(74) Representative: Kuosmanen, Timo
(86) International application number: PCT/FI2001/001086
(87) International publication number: WO 2002/047959

(56) References cited:
- WO-A1-94/05918
- WO-A1-98/39174
- DE-A- 2 245 862
- FI-U- 4 164
- SE-C2- 514 012

## Description

### FIELD OF THE INVENTION

The invention relates to a vehicle chassis comprising at least two longitudinal beams spaced apart at a predetermined distance from each other, at least one transverse beam transverse to the longitudinal beams, the longitudinal beams and the transverse beam being arranged on different levels and joined together immovably and, further, a substantially plate-like fixing piece being arranged between a longitudinal beam and a transverse beam at the intersection thereof, the fixing piece extending beyond the side surfaces of the beams at the intersection.

The invention further relates to a fastening arrangement, which comprises a substantially plate-like fixing piece arranged between an upper beam and a lower beam of a vehicle and located at the intersection of the beams, where the fixing piece extends beyond the side surfaces of the beams, the fixing piece being immovably fastened to the upper beam and, correspondingly, to the lower beam.

The invention further relates to a fixing piece that allows an upper beam and a lower beam of a vehicle chassis structure to be joined together, the fixing piece being a substantially plate-like piece that can be arranged between the upper beam and the tower beam, at the intersection of the beams arranged on different levels, and, further, the fixing piece being dimensioned to extend beyond the side surfaces of the beams at the intersection.

### BACKGROUND OF THE INVENTION

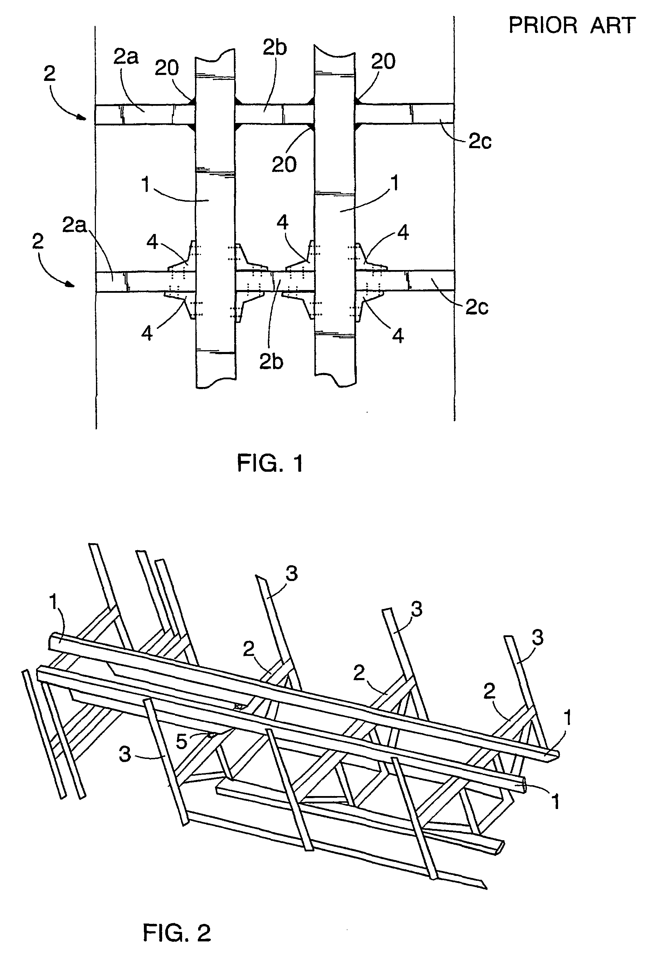

The load-bearing chassis structure of a heavy vehicle usually consists of two beams arranged in the longitudinal direction of the vehicle and a required number of transverse beams. The body of the vehicle is usually constructed onto a load-bearing chassis. Figure 1 is a top view illustrating two prior art structures for joining together chassis beams. In the upper solution, transverse beams 2 are formed of pieces 2a, 2b, 2c cut into suitable lengths and welded to the sides of longitudinal beams 1. Since a transverse beam consists of a number of separate parts joined together, many parts and welding seams 20 are needed. Moreover, welding bevels must be provided at the joint surfaces of the beams to be welded together, and the beams must be fastened to strong support jigs for the welding. This is a laborious and slow method for building the chassis. In addition, highly skilled mechanics and proper tools are a prerequisite for sufficient quality to be achieved. In the other prior art solution shown lower in Figure 1, the transverse beam parts 2a, 2b and 2c and the longitudinal beams 1 are joined together using corner pieces 4 attached by means of screws (shown by dotted lines). A corner piece suitable for this purpose is disclosed in US Patent 4,230,361. However, at a single intersection of the beams, a total of four corner pieces are needed. Further, each corner piece is fastened with at least four fastening screws, a single intersection thus comprising at least 16 screws. The number of parts needed in the construction is thus extremely high, and it is laborious to screw the corner pieces to the beams. WO 98/39174 discloses a mounting arrangement for mounting a loading, bunk to frame beam of a vehicle, which features accord with the preamble of claims 1, 5 and 7.

### BRIEF DESCRIPTION OF THE INVENTION

It is the object of the present invention to provide a novel and improved arrangement for connecting vehicle beams.

The chassis of the invention is characterized in that the transverse beam extends as a uniform piece from a first side of the chassis to its second side; that the fixing piece is attached to a beam on top of it at the fixing piece portions that extend beyond the side surfaces of the beam below the fixing piece; that the fixing piece is attached to a beam below it at the fixing piece portions that extend beyond the side surfaces of the beam on top of the fixing piece; and that the fixing piece is fastened to the beam on top of it on both sides of the beam below the fixing piece, and, correspondingly, the fixing piece is separately fastened to the beam below the piece on both sides of the beam on top of the fixing piece, whereby the fixing piece is fastened to the beams in a crosswise fastening.

The fastening arrangement of the invention is characterized in that the fixing piece is fastened to the upper beam at the fixing piece portions extending beyond the side surfaces of the lower beam; that the fixing piece is fastened to the lower beam at the fixing piece portions extending beyond the side surfaces of the upper beam; and that the fixing piece is fastened to the upper beam on both sides of the lower beam, and, correspondingly, the fixing piece is separately fastened to the lower beam on both sides of the upper beam, whereby the fastening between the fixing piece and the lower beam is crosswise in relation to the fastening between the fixing piece and the upper beam.

The fixing piece of the invention is characterized in that the fixing piece portions that extend beyond the side surfaces of the beams are crosswise to each other and the portions are provided with means for fastening the fixing piece to the respective beam.

The invention is based on the idea that the vehicle chassis comprises at least two longitudinal chassis beams spaced apart and at least one transverse chassis beam. The beams are joined together immovably and they form a kind of a lattice structure. The longitudinal beams and the transverse beams extend on different levels relative to one another, and, as distinct from the prior art, the transverse beam extends as a uniform piece from a first side of the chassis to its second side. Instead of a transverse beam made up of a plural number of separate pieces, this allows a single beam of a suitable length to be cut, which significantly reduces the number of parts and joints required. Intersecting chassis beams are joined together by a substantially plate-like fixing piece arranged between the beams, the beams being separately attached to the piece. The fixing piece is shaped and dimensioned so that when mounted in place, it extends beyond the side surfaces of the chassis beam above and, similarly, the one below it. The fixing piece is attached to the beam on top of it from the under surface of the fixing piece and at the fixing piece portion extending beyond the side surfaces of the lower chassis beam. Correspondingly, the fixing piece is attached to the beam below it from the upper surface of the fixing piece and at the fixing piece portion extending beyond the side surfaces of the upper beam. The projecting portion facilitates the fastening. Depending on the vehicle construction, the transverse beams can be arranged either above or below the longitudinal beams.

It should be noted that in the present application the term 'vehide' is used for vehicles having a bearing chassis structure made of chassis beams, such vehicles typically comprising buses, trucks and other equipment known as heavy-duty transportation stock, including rail traffic equipment. Further, 'vehicle' also covers trailers and other similar mobile transport equipment.

According to a widely held view, a plate-like piece is suitable only when fairly small loads are transferred in a cross-direction of the plate's plane, because the plate is relatively thin and therefore liable to bend in this direction. It is also known that a plate-like piece can be subjected to a tensile load acting in the direction of the plate's surface and that a compression acting in this direction involves the risk of the plate collapsing. However, the plate-like fixing piece of the invention was surprisingly observed to behave in an advantageous manner in a joint between chassis beams. Due to the crosswise fastening, the tension field created in the fixing piece is uniform. For the same reason, when the fixing piece is subjected to a cross-direction load, it tends to form a saddle surface, which is known to be an advantageous shape from the point of view of load management. Further, the relatively thin fastening plate is capable of receiving even high compression loads acting in the direction of the plate's surface, because it is supported between the intersecting chassis beams and therefore it cannot collapse.

Moreover, a preferred embodiment of the invention is based on the idea that the fixing piece is attached with a screw joint to the chassis beams to be joined together. For this purpose, the fixing piece comprises openings for the fastening screws, and the cross-sectional profiles of both chassis beams to be joined together preferably comprise a fastening groove for fitting a counter piece on the beam edge facing the fixing piece. The counter piece can be slid into the fastening groove in a predetermined position, and, due to its shape, the counter piece locks into the fastening groove when the fastening screw is tightened. This enables a particularly rapid joining of the chassis beams: studies have shown that the assembling of the chassis may be even twice as rapid as the assembling of conventional constructions. A sufficient fastening at the intersection is achieved with only four fastening screws providing a crosswise fastening. Moreover, no special tools or experience is needed in the assembly. In addition, the screw joint can easily be opened later, for example when structural changes are to be made to the vehicle.

Further, a second preferred embodiment of the invention is based on the idea that the fixing piece is provided with at least one protrusion on both of its joint surfaces, and that the protrusions on different sides of the fixing piece are transverse to each other. The protrusions set into the fastening groove or against some other suitable counter surface on the joint surface of the beam to be fastened. The protrusions prevent the beams that are to be joined together from turning relative to each other, whereby a separate skew bracing is not needed in the chassis structure. This application allows a simple, but extremely solid chassis structure to be built. In addition, a fixing piece provided with protrusions speeds up and simplifies the building of the chassis, because the protrusions always set the chassis beams that are to be joined together at a predetermined angular position relative to each other, whereby a mounting jig is not necessarily needed at all.

### BRIEF DESCRIPTION OF THE DRAWINGS

The invention will be described in greater detail with reference to the accompanying drawings, in which
Figure 1 is a top view illustrating some of the above-described prior art solutions for joining together chassis beams;
Figure 2 is a schematic perspective view of part of a chassis structure of the invention;
Figure 3 is a schematic detail of the chassis of Figure 2;
Figure 4 is a schematic perspective view of a fixing piece of the invention,
Figure 5 is a schematic top view of a fixing piece of the invention;
Figure 6 is a schematic view of a preferred cross-sectional profile of a chassis beam;
Figure 7 is a schematic top view of a preferred counter piece of a fastening screw;
Figure 8 is a schematic top view of the principle of a preferred fastening arrangement;
Figure 9 is a schematic top view of a fixing piece application of the invention;
Figure 10 is a schematic sectional view of a joint made between chassis beams using the fixing piece of Figure 9;
Figures 11a and 11b are schematic views from different directions to further illustrate the behaviour of the fixing piece of the invention when subjected to a load, and Figure 11c is a representation of the combined tension acting on the fixing plate;
Figure 12 is a schematic top view of another solution for joining together intersecting chassis beams;
Figure 13 is a schematic perspective view of a fixing piece of the invention whose joint surfaces are provided with protrusions;
Figure 14 is a schematic perspective view of a second fixing piece of the invention whose joint surfaces are provided with protrusions; and
Figure 15 is a schematic perspective view of the bending of the fixing piece of the invention into a saddle shape by impact of loads.

For the sake of clarity, the invention is highly simplified in the drawings. Like parts are referred to using like reference numerals.

### DETAILED DESCRIPTION OF THE INVENTION

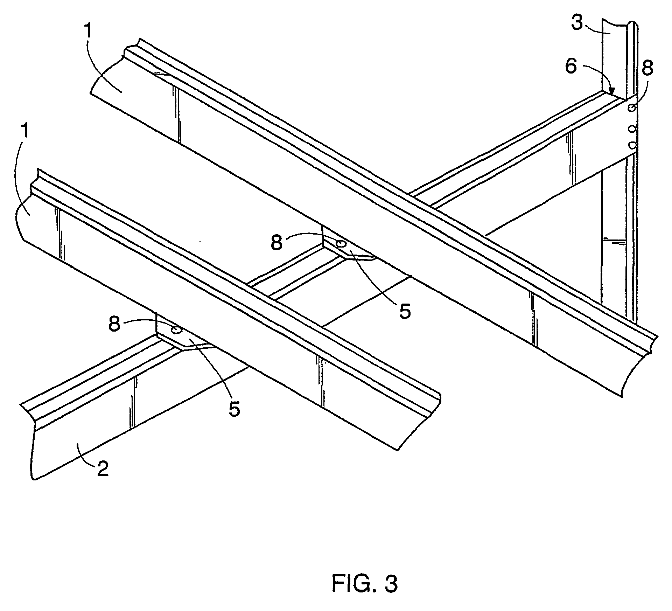

Figure 2 shows part of a bus chassis. For clarity of illustration, the structure has been simplified. The chassis comprises two parallel longitudinal beams 1 arranged at a distance from one another, with a sufficient number of transverse beams 2 arranged transversely, and usually perpendicularly, to the longitudinal beams. The transverse beams extend as single, uniform pieces from a first vehicle side to a second side thereof. At both ends of the transverse beams there are vertical columns 3 that belong to the bodywork of the vehicle and serve as a support for the profiles, roof profiles and surface plates of the bodywork. When necessary, further support can be arranged in the chassis structure for the axles, the engine and the gearbox. Figure 3 shows a detail of the chassis structure. Longitudinal beams 1 and a transverse beam 2 extend on different levels, the transverse beam being the lower one in this example. At the intersection of the beams, there is a fixing piece 5 arranged between the beams to join the beams together and to transfer forces between them.

As regards vehicle chassis structures, not only their solid-ness and suitability for manufacture is to be taken into account, but in order to maintain reasonable fuel costs, particular attention needs to be paid also to the weight of the chassis. For example, the bus chassis of Figure 2 may be constructed using chassis beams made of aluminium or some other light metal. Further, by using the fixing pieces of the invention, instead of prior art corner pieces, the chassis can be made lighter. With lower chassis weight it is possible to use an engine of less power and, thereby, lower weight, a lighter gearbox, etc., the entity thus being substantially lighter than before.

Further, Figure 3 shows a preferred fastening arrangement between the vertical column 3 and an end of the transverse beam 2. On the end portion of the transverse beam there is formed, by means of milling for example, a mounting cavity 6 which corresponds to the width of the vertical column and into which the vertical column can be placed. The depth of the mounting cavity corresponds preferably at least approximately to the profile of the vertical column. The dimensioning of the transverse beam and the vertical column relative to each other is such that the mounting cavity provided for the vertical column occupies substantially the entire space between the side plates of the transverse beam, the side plates forming a fork-like end to the transverse beam. The transverse beam and the vertical column mounted into the mounting cavity at the end of the beam are joined together preferably by means of a screw joint. The branches of the transverse beam end therefore comprise openings for the fastening screws and the vertical column is a profile whose joint surfaces comprise locking grooves for receiving the counter piece of the fastening screw. Alternatively, the transverse beam may be joined to a vertical column of a desired cross-section by means of welding or rivets, for example.

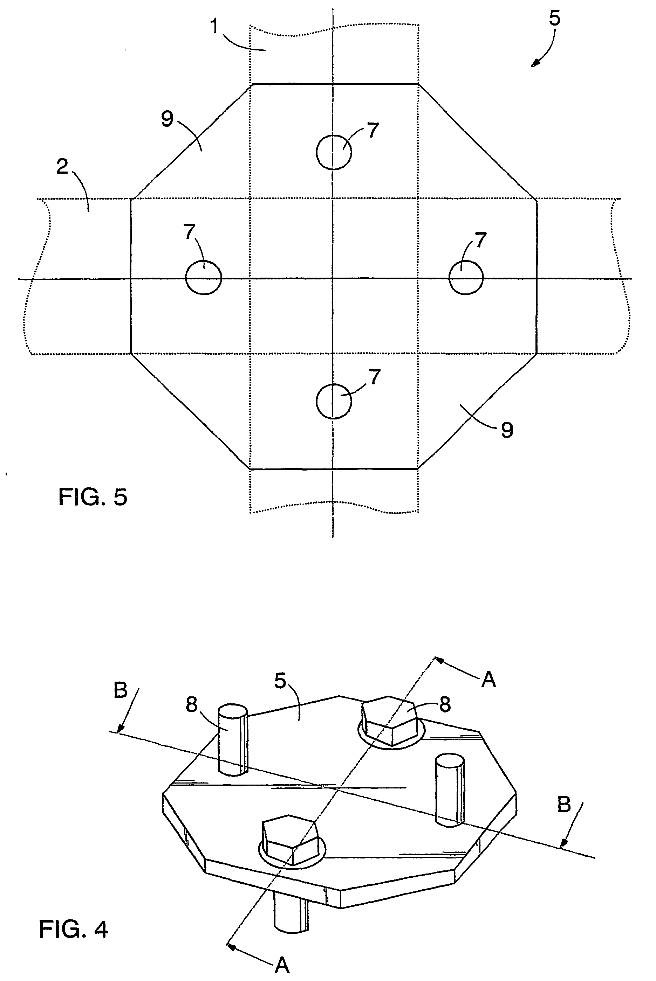

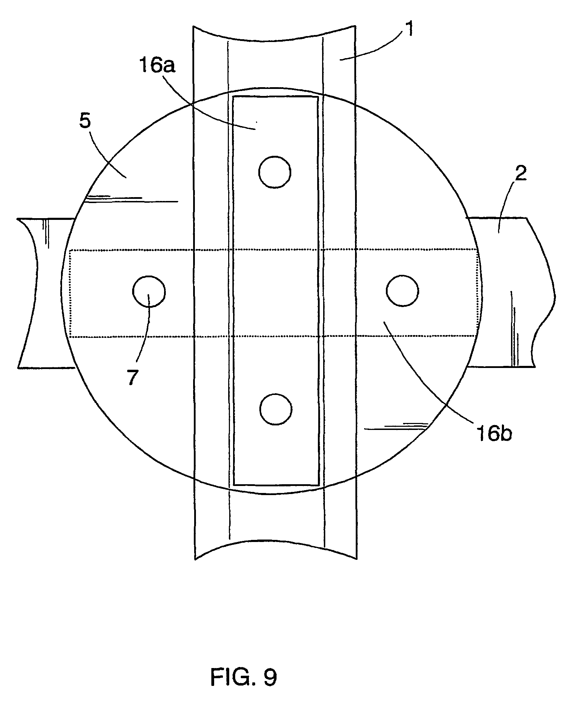

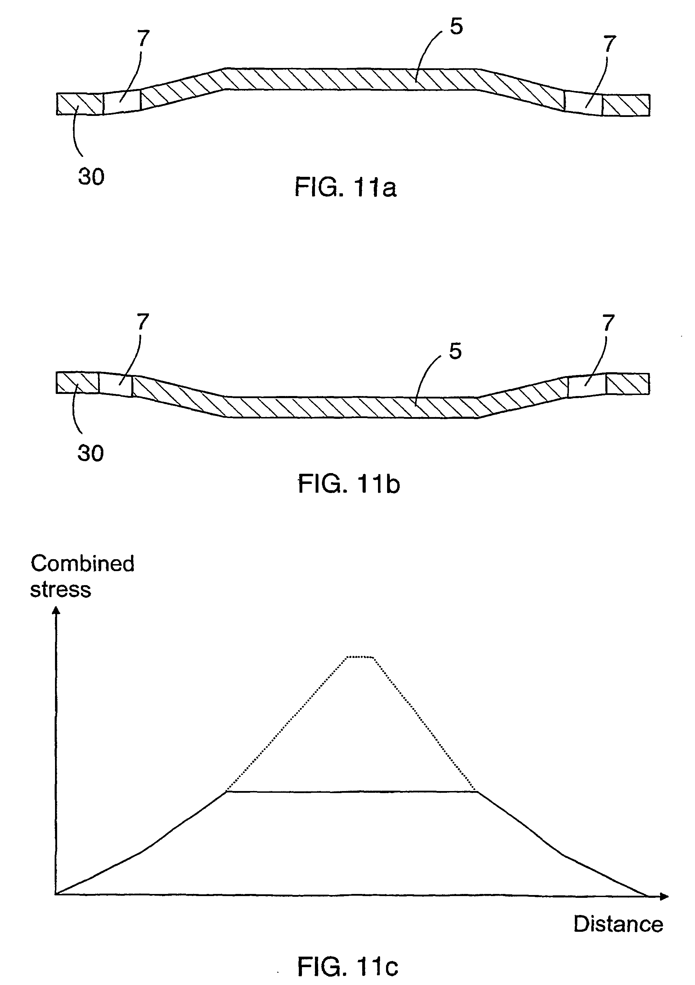

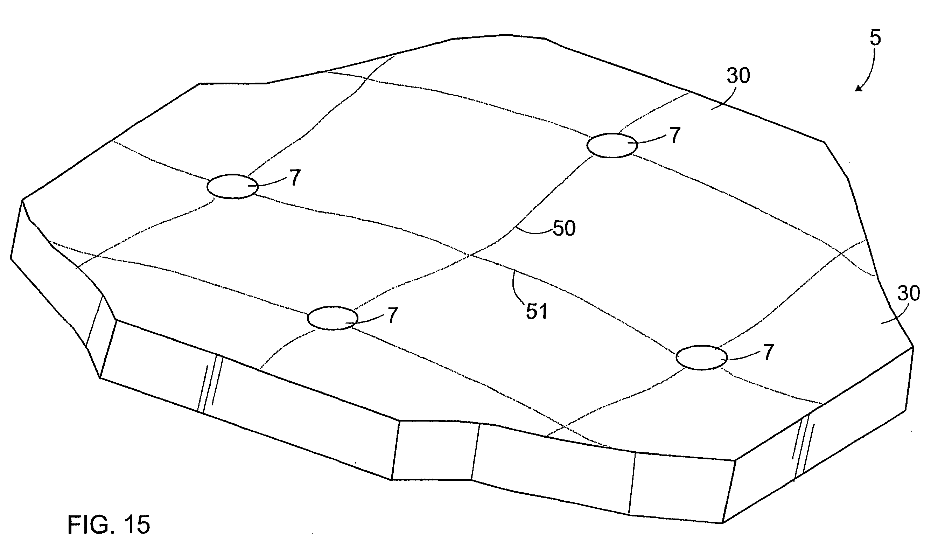

Figures 4 and 5 show a fixing piece 5 of the invention. The fixing piece is a plate-like piece and it may be relatively thin. Usually a plate thickness of 10 to 40 mm is sufficient. The simplest way to make the fixing piece is to cut it from a plate material of a suitable thickness. Alternatively, the fixing piece can be moulded or machined from a suitable blank. The fixing piece is made of metal, preferably light metal, such as aluminium or an aluminium alloy, whereby a weatherproof, light, and easily machinable fixing piece is obtained. If necessary, it can also be made of a plastic composite, for example, or some other material suitable for the purpose. The price of the fixing piece is affordable. The fixing piece shown in the Figure is hexagonal, but it can also have some other form, such as rectangular or round, as shown in Figure 9. In any case, the fixing piece is dimensioned such that the plate extends beyond the side surfaces of intersecting beams to allow the fixing piece to be attached to the beams at these protruding portions. As shown, the protruding portions are provided with openings 7 for fastening screws 8. For load management, the essential aspect is that the fixing plate also covers the sections forming corners 9 between the intersecting beams. Due to its crosswise fastening to the beams, the plate-like piece behaves like a saddle surface in a load situation, as shown in Figure 15. Figures 11a and 11b to be described below further illustrate the bending of the fastening plate as seen from different directions.

A structure assembled using screws has an advantage over a welded structure in that it allows assembling jigs of significantly lighter and simpler construction to be used. In welding, massive jigs are required to receive the great forces caused by thermal expansion, but in screw fastening such forces do not appear. Further, as is well known in the art, a screw joint endures fatigue loading better than a welded joint.

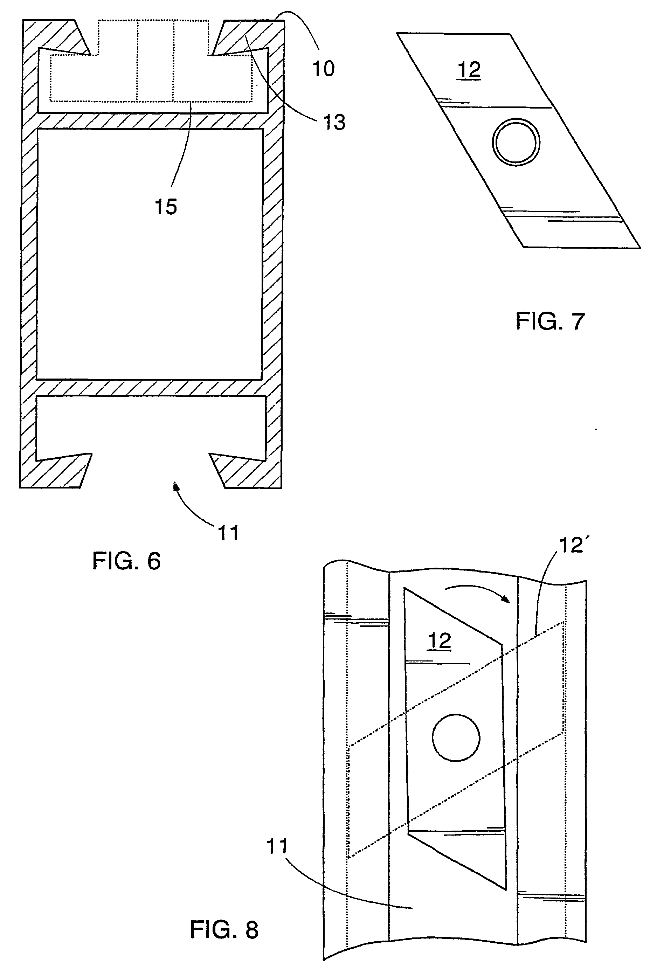

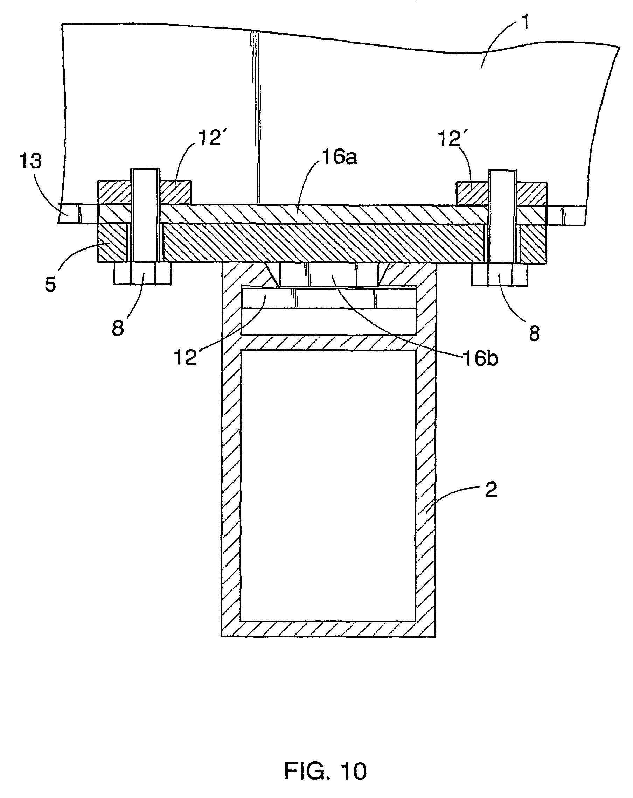

Figure 6 shows a preferred cross-sectional profile of a chassis beam. This profile is suitable for both longitudinal and transverse beams. The beam is preferably made of aluminium or an aluminium alloy, although other materials, such as steel, can also be used, when necessary. The profile is rectangular and its shorter sides 10 are provided with fastening grooves 11 into which a fastening screw counter piece 12, known per se and shown in Figure 7, can be set. The edges of the fastening groove can be provided with horizontal portions 13, i.e. the shape of the groove substantially resembles a letter T. Other profiles are naturally possible as well. Fastening grooves do not need to be provided on both sides of the profile; it is sufficient to have a fastening groove at least on the profile side facing the fixing piece, as in the lower beam of Figure 10. The counter piece 12 of the fastening screw has the form of a parallelogram (a kind of a rhombus). By aligning the counter piece with the fastening groove 11 on the chassis beam, the counter piece can be pushed in place into the fastening groove. When the fastening screw is then tightened in the counter piece, the counter piece rotates in the fastening groove and sets against vertical walls 14 of the profile. This stops the rotation of the counter piece, and the fastening screw begins to tighten it. Figure 8 shows a rotated counter piece 12' drawn in a line of dots and dashes. The rotated counter piece 12' can no longer come out of the fastening groove 11, because it is secured in place by the horizontal edges 13 of the fastening groove. Alternatively, a counter piece having a cross-section dimensioned so that it cannot come out of the fastening gap can be pushed into the fastening groove from the end of the chassis beam. This type of counter piece is illustrated by a dotted line 15 in Figure 6. There are thus various alternatives available for fastening the fixing piece to the beams.

The fixing piece according to Figure 9 preferably comprises protrusions 16a and 16b on both sides of the piece. The protrusion 16b that is on the underside of the fixing piece is shown by a dotted line. In this case the protrusions are elongated and dimensioned so that they can be pushed into the fastening groove 11 on the fastening surface of the chassis beams, as shown in Figure 10. This type of fixing piece provides a simple means for arranging the skew bracing of the chassis structure, because the protrusions keep the intersecting chassis beams solidly in place and prevent the beams from turning relative to each other. Further, the protrusions always set the chassis beams that are to be joined together into the correct position relative to each other, whereby the mounting is precise and mounting jigs are not necessarily needed at all. A fixing piece provided with protrusions can be made by moulding or by milling it from a suitable blank, for example.

Figures 11a and 11b illustrate the behaviour of the fixing plate when subjected to a load. Due to the crosswise fastening, the fixing plate takes the form of a saddle surface when subjected to a load acting in a cross-direction of on the plate's plane. For the sake of clarity, two cross-sections of a fixing plate subjected to a load, seen from different directions, are shown: Figure 11a shows the fixing plate from direction A indicated in Figure 4, and Figure 11b from direction B. Figure 11c is a graph illustrating a combined stress. The combined tension comprises a bending stress component and a shear stress component. As is shown in Figure 11c, the stress field created is surprisingly uniform, compared with the situation drawn in a dotted line where the fixing plate is not subject to a crosswise load. As regards the loads, it is important that a sufficiently long portion 30 is provided between the outer edge of the fixing plate and the openings 7 made for the fastening screws, because the portion resists the bending of the fastening plate.

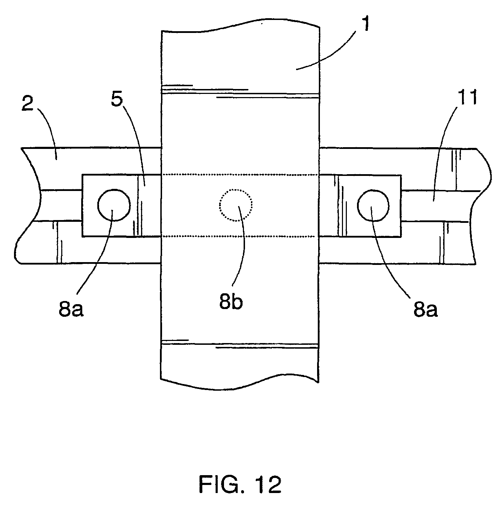

Figure 12 shows a solution in which a rectangular fixing plate 5 at an intersection of the longitudinal beam 1 and the transverse beam 2 extends only beyond the side surfaces of the longitudinal beam. In that case the fixing plate 5 is fastened to the transverse beam 2 with fastening screws 8a on the portions extending beyond said side surfaces and, further, to the underside of the longitudinal beam with a fastening screw 8b arranged on the mid-portion of the plate. The head of the fastening screw 8b is dimensioned to fit into the fastening groove 11 of the transverse beam. The fixing plate shown in the Figure is applicable for use at locations where the loads acting in the cross-direction of the plate's plane are relatively small. Since the fixing plate is not fastened using a crosswise fastening, it does not behave as disclosed in Figures 11a and 11b and, therefore, a vertical load acting on the vehicle tends to bend the fastening plate into an arc-like shape. The fastening solution shown in the Figure is, however, capable of receiving well horizontal forces acting on the vehicle and, thereby, maintaining intersecting beams in a predetermined position relative to each other.

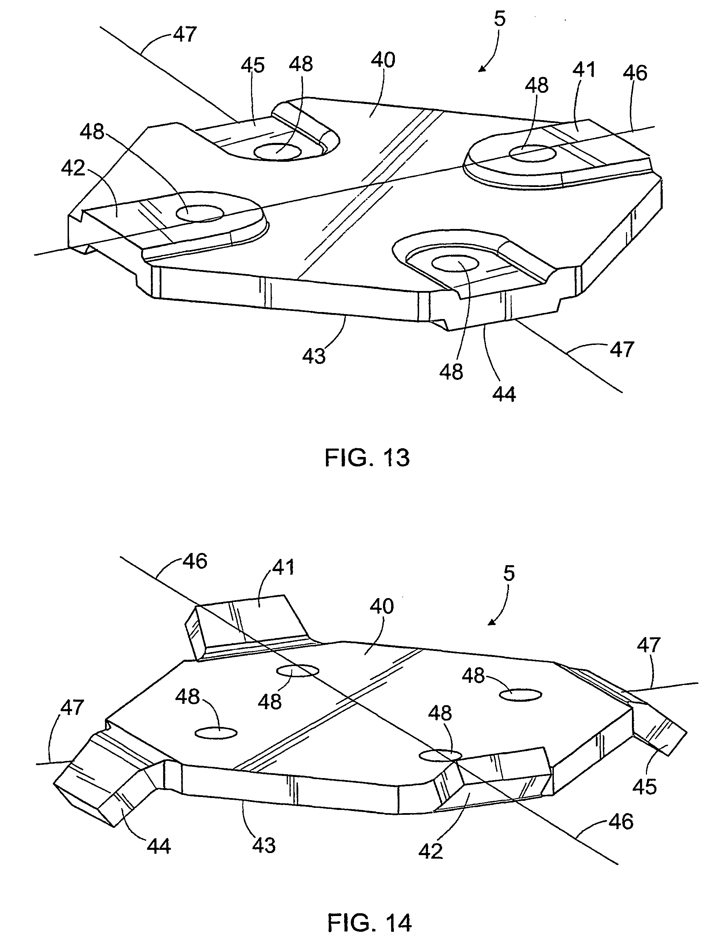

Figure 13 shows an application of the fixing piece 5 of the invention. A first surface 40 of the fixing piece is provided with protrusions 41, 42 arranged on opposite edges of the piece and, further, a second surface 43 of the fixing piece is provided with second protrusions 44, 45 on opposite edges of the piece. The first protrusions 41, 42 form a first fastening line 46 with which the beam to be arranged to the first surface 40 of the fixing piece is aligned when the first protrusions 41, 42 are arranged against the counter surfaces on the beam, for example into a fastening groove. Further, the second protrusions 44, 45 form a second fastening line 47 with which the beam to be arranged to the second surface 43 of the fixing piece is aligned when the second protrusions 44, 45 are arranged against the counter surfaces on the beam. The protrusions 41, 42, 44, 45 may be provided with fastening holes 48 for fastening screws. The protrusions shown in the Figure can be conveniently and rapidly formed by pressing with a pressing tool.

Figure 14 shows a further application of the fixing piece 5 of the invention where the first surface 40 of the fixing piece is provided with first protrusions 41, 42 formed by bending the corners of the fixing piece upward with a pressing tool. The first protrusions 41, 42 thus form a first fastening line 46 for fastening a beam to the first surface 40 of the fixing piece. Correspondingly, bent corners on the second surface 43 of the fixing piece form second protrusions 44, 45 and, thereby, a second fastening line 47 for fastening a beam to the second surface 43 of the fixing piece. The protrusions shown in Figure 14 are meant to set into grooves arranged on the beams, but another alternative is to branch the end of the protrusions and support the protrusions against the side surfaces of the beams that are to be joined together. Because of the protrusions 41, 42, 44, 45 shown in Figure 13 and Figure 14, a separate bracing of the structure is not necessarily needed. Moreover, the protrusions 41, 42, 44, 45 set the beams that are to be joined together to a desired angular position relative to each other. As such, the operation of the members used for positioning the beams may be independent of the method of fastening the beam and the fixing piece together.

Figure 15 illustrates the bending of the fixing piece of the invention into a saddle surface by impact of vertical forces. The change in the shape of the fixing piece 5 is illustrated by dotted lines 50 and 51 that represent transitions.

The drawings and the related specification are only intended to illustrate the inventive idea. The details of the invention may vary within the scope of the claims. Although from the point of view of both manufacturing and load management, the fixing piece of the invention is preferably fastened to the beams by means of a screw joint, in some cases other fastening methods, such as welding or riveting, can be used as well. Further, the fixing plate may be provided with quick-coupling means to attach the plate to the chassis beams. The quick-coupling means may comprise for example a suitably shaped counter piece, which is arranged into a fastening groove provided on the chassis beam profile and turned into a predetermined position, the shape of the piece causing it to set tightly against the horizontal wall of the fastening groove edge and, at the same time, to turn into a position that prevents it from coming out through the fastening groove. The fixing plate may also be formed so as to enable the chassis beams to be arranged to a desired angle, other than perpendicular, relative to each other.

## Claims

1. A vehicle chassis
comprising at least two longitudinal beams (1) spaced apart at a predetermined distance from each other and at least one transverse beam (2) transverse to the longitudinal beams (1);
the longitudinal beams (1) and the transverse beam (2) being arranged on different levels and joined together immovably;
and, further, a substantially plate-like fixing piece (5) being arranged between a longitudinal beam (1) and a transverse beam (2) at the intersection thereof, the fixing piece extending beyond the side surfaces of the beams at the intersection,
**characterized in that**
the transverse beam (2) extends as a uniform piece from a first side of the chassis to its second side;
that the fixing piece (5) is attached to a beam on top of it at the fixing piece portions that extend beyond the side surfaces of a beam below the fixing piece (5);
that the fixing piece is attached to the beam below it at the fixing piece portions that extend beyond the side surfaces of the beam on top of the fixing piece (5);
and that the fixing piece (5) is fastened to the beam on top of it on both sides of the beam below the fixing piece (5), and, correspondingly, the fixing piece (5) is separately fastened to the beam below the piece (5) on both sides of the beam on top of the fixing piece, whereby the fixing piece (5) is fastened to the beams in a crosswise fastening.

2. A chassis according to claim 1, **characterized in that** the fixing piece (5) is fastened to the longitudinal beam (1) by means of at least two fastening screws (8) and that the fixing piece (5) is fastened to the transverse beam (2) by means of at least two fastening screws (8).

3. A chassis according to claim 2, **characterized in that** the longitudinal beam (1) and the transverse beam (2) are provided with a fastening groove (11) at least on their joint surfaces facing the fixing piece (5), that the fastening screw (8) comprises a counter piece (12, 15), and that the counter piece (12, 15) is arranged into said fastening groove (11).

4. A chassis according to claim 3, **characterized in that** because of its form, the counter piece (12) of the fastening screw is locked in place into the fastening groove (11) when the fastening screw (8) is tightened.

5. A fastening arrangement, which comprises a substantially plate-like fixing piece (5) arranged between an upper beam and a lower beam of a vehicle and located at the intersection of the beams where the fixing piece (5) extends beyond the side surfaces of the beams, the fixing piece (5) being immovably fastened to the upper beam and, correspondingly, to the lower beam, **characterized in that**
the fixing piece (5) is fastened to the upper beam at the fixing piece portions extending beyond the side surfaces of the lower beam;
the fixing piece (5) is fastened to the lower beam at the fixing piece portions extending beyond the side surfaces of the upper beam;
and that the fixing piece (5) is fastened to the upper beam on both sides of the lower beam, and, correspondingly, the fixing piece (5) is separately fastened to the lower beam on both sides of the upper beam, whereby the fastening between the fixing piece (5) and the lower beam is crosswise in relation to the fastening between the fixing piece (5) and the upper beam.

6. A fastening arrangement according to claim 5, **characterized in that** the joint surface on the upper side of the fixing piece (5) is provided with at least one protrusion to be arranged against the counter surface of the upper beam; that the joint surface on the underside of the fixing piece (5) is provided with at least one protrusion to be arranged against the counter surface of the lower beam; and that said protrusions on the upper side and the underside are arranged to position the upper beam and the lower beam to a predetermined angular position relative to each other.

7. A fixing piece that allows an upper beam and a lower beam of a vehicle chassis structure to be joined together, the fixing piece (5) being a substantially plate-like piece to be arranged between the upper beam and the lower beam, at the intersection of the beams arranged on different levels, and, further, the fixing piece (5) being dimensioned to extend beyond the side surfaces of the beams (1, 2) at the intersection, **characterized in that** the fixing piece (5) portions that extend beyond the side surfaces of the beams (1, 2) are crosswise to each other and the portions are provided with means for fastening the fixing piece (5) to the respective beam, whereby the fastening between the fixing piece (5) and the lower beam is crosswise in relation to the fastening between the fixing piece (5) and the upper beam.

8. A fixing piece according to claim 7, **characterized in that** the portions extending beyond the side surfaces of the upper beam and the lower beam comprise openings (7) for fastening screws (8).

9. A fixing piece according to claim 7 or 8, **characterized in that** at least one joint surface of the fixing piece (5) is provided with at least one protrusion (16a, 16b), and that the protrusion can be set into a fastening groove (11) or a similar recess provided on the joint surface of an intersecting beam.

10. A fixing piece according to any one of claims 7 to 9, **characterized in that** the first joint surface of the fixing piece (5) is provided with at least one protrusion, that the second joint surface of the fixing piece (5) is provided with at least one protrusion, and that the protrusions of the first and the second joint surfaces are arranged into a predetermined angular position relative to each other.

## Patentansprüche

1. Fahrzeugrahmen,
umfassend wenigstens zwei Längsträger (1), die einen zuvor festgelegten Abstand zueinander haben, und wenigstens einen Querträger (2), der sich quer zu den Längsträgern (1) erstreckt;
wobei die Längsträger (1) und der Querträger (2) sich auf verschiedenen Ebenen befinden und unbeweglich miteinander verbunden sind;
und des Weiteren ein im Wesentlichen plattenartiges Befestigungsteil (5), das zwischen einem Längsträger (1) und einem Querträger (2) an deren Schnittpunkt angeordnet ist, wobei sich das Befestigungsteil über die Seitenflächen der Träger an dem Schnittpunkt hinaus erstreckt;
**dadurch gekennzeichnet, dass**
sich der Querträger (2) als ein einheitliches Stück von einer ersten Seite des Rahmens zu seiner zweiten Seite erstreckt;
dass das Befestigungsteil (5) an einem auf ihm befindlichen Träger an den Abschnitten des Befestigungsteils, die sich über die Seitenflächen eines Trägers unter dem Befestigungsteil (5) hinaus erstrecken, befestigt ist;
dass das Befestigungsteil an dem unter ihm befindlichen Träger an den Abschnitten des Befestigungsteils, die sich über die Seitenflächen des Trägers auf dem Befestigungsteil (5) hinaus erstrecken, befestigt ist;
und dass das Befestigungsteil (5) an dem auf ihm befindlichen Träger auf beiden Seiten des Trägers unter dem Befestigungsteil (5) befestigt ist, und dass dementsprechend das Befestigungsteil (5) an dem Träger unter dem Teil (5) auf beiden Seiten des Trägers auf dem Befestigungsteil separat befestigt ist, wodurch das Befestigungsteil (5) an den Trägern in einer Überkreuz-Konfiguration befestigt ist.

2. Rahmen nach Anspruch 1, **dadurch gekennzeichnet, dass** das Befestigungsteil (5) mit wenigstens zwei Befestigungsschrauben (8) an dem Längsträger (1) befestigt ist und dass das Befestigungsteil (5) mit wenigstens zwei Befestigungsschrauben (8) an dem Querträger (2) befestigt ist.

3. Rahmen nach Anspruch 2, **dadurch gekennzeichnet, dass** der Längsträger (1) und der Querträger (2) wenigstens an ihren Verbindungsflächen, die zu dem Befestigungsteil (5) weisen, mit einer Befestigungsnut (11) versehen sind, dass die Befestigungsschraube (8) ein Gegenstück (12, 15) umfasst und dass das Gegenstück (12, 15) in der Befestigungsnut (11) angeordnet ist.

4. Rahmen nach Anspruch 3, **dadurch gekennzeichnet, dass** das Gegenstück (12) der Befestigungsschraube aufgrund seiner Form an seinem Platz in der Befestigungsnut (11) arretiert wird, wenn die Befestigungsschraube (8) festgezogen wird.

5. Befestigungskonfiguration, die ein im Wesentlichen plattenartiges Befestigungsteil (5) umfasst, das zwischen einem oberen Träger und einem unteren Träger eines Fahrzeugs angeordnet ist und sich am Schnittpunkt der Träger befindet, wobei sich das Befestigungsteil (5) über die Seitenflächen der Träger hinaus erstreckt, wobei das Befestigungsteil (5) unbeweglich an dem oberen Träger und entsprechend an dem unteren Träger befestigt ist, **dadurch gekennzeichnet, dass**
das Befestigungsteil (5) an dem oberen Träger an den Abschnitten des Befestigungsteils, die sich über die Seitenflächen des unteren Trägers hinaus erstrecken, befestigt ist;
dass das Befestigungsteil (5) an dem unteren Träger an den Abschnitten des Befestigungsteils, die sich über die Seitenflächen des oberen Trägers hinaus erstrecken, befestigt ist;
und dass das Befestigungsteil (5) an dem oberen Träger auf beiden Seiten des unteren Trägers befestigt ist, und dass dementsprechend das Befestigungsteil (5) an dem unteren Träger auf beiden Seiten des oberen Trägers separat befestigt ist, wodurch die Befestigung zwischen dem Befestigungsteil (5) und dem unteren Träger relativ zu der Befestigung zwischen dem Befestigungsteil (5) und dem oberen Träger in einer Überkreuz-Beziehung erfolgt.

6. Befestigungskonfiguration nach Anspruch 5, **dadurch gekennzeichnet, dass** die Verbindungsfläche auf der Oberseite des Befestigungsteils (5) mit wenigstens einem Vorsprung versehen ist, der an der Gegenfläche des oberen Trägers angeordnet wird; dass die Verbindungsfläche auf der Unterseite des Befestigungsteils (5) mit wenigstens einem Vorsprung versehen ist, der an der Gegenfläche des unteren Trägers angeordnet wird; und dass diese Vorsprünge an der Oberseite und der Unterseite so angeordnet sind, dass der obere Träger und der untere Träger in einer zuvor festgelegten Winkelbeziehung relativ zueinander positioniert werden.

7. Befestigungsteil, das es ermöglicht, einen oberen Träger und einen unteren Träger eines Fahrzeugrahmens miteinander zu verbinden, wobei es sich bei dem Befestigungsteil (5) um ein im Wesentlichen plattenartiges Teil handelt, das zwischen dem oberen Träger und dem unteren Träger an dem Schnittpunkt der auf verschiedenen Ebenen befindlichen Träger angeordnet wird, und wobei des Weiteren das Befestigungsteil (5) so bemessen ist, dass es sich über die Seitenflächen der Träger (1, 2) an dem Schnittpunkt hinaus erstreckt, **dadurch gekennzeichnet, dass** die Abschnitte des Befestigungsteils (5), die sich über die Seitenflächen der Träger (1, 2) hinaus erstrecken, zueinander in einer Überkreuz-Beziehung stehen und dass die Abschnitte mit Mitteln versehen sind, um das Befestigungsteil (5) an dem jeweiligen Träger zu befestigen, wodurch die Befestigung zwischen dem Befestigungsteil (5) und dem unteren Träger relativ zu der Befestigung zwischen dem Befestigungsteil (5) und dem oberen Träger in einer Überkreuz-Beziehung erfolgt.

8. Befestigungsteil nach Anspruch 7, **dadurch gekennzeichnet, dass** die Abschnitte, die sich über die Seitenflächen des oberen Trägers und des unteren Trägers hinaus erstrecken, Öffnungen (7) für Befestigungsschrauben (8) umfassen.

9. Befestigungsteil nach Anspruch 7 oder 8, **dadurch gekennzeichnet, dass** wenigstens eine Verbindungsfläche des Befestigungsteils (5) mit wenigstens einem Vorsprung (16a, 16b) versehen ist und dass der Vorsprung in eine Befestigungsnut (11) oder eine ähnliche Ausnehmung eingesetzt werden kann, die an der Verbindungsfläche eines überschneidenden Trägers ausgebildet ist.

10. Befestigungsteil nach einem der Ansprüche 7 bis 9, **dadurch gekennzeichnet, dass** die erste Verbindungsfläche des Befestigungsteils (5) mit wenigstens einem Vorsprung versehen ist, dass die zweite Verbindungsfläche des Befestigungsteils (5) mit wenigstens einem Vorsprung versehen ist und dass die Vorsprünge der ersten und der zweiten Verbindungsfläche in einer zuvor festgelegten Winkelposition relativ zueinander angeordnet sind.

## Revendications

1. Un châssis pour véhicule,
comprenant au moins deux poutres formant longeron (1) espacés à une distance prédéterminée l'une de l'autre et au moins une poutre formant traverse (2) orientée transversalement par rapport aux poutres formant longeron (1) ;
les poutres formant longeron (1) et la poutre formant traverse (2) étant agencées à des niveaux différents et reliées ensemble de façon indésolidarisable ;
et, en outre, une pièce de fixation (5) sensiblement analogue à une plaque, agencée entre une poutre formant longeron (1) et une poutre formant traverse (2), à son intersection, la pièce de fixation s'étendant au-delà des surfaces latérales des poutres, à l'intersection,
**caractérisé en ce que**
la poutre formant traverse (2) s'étend sous forme de pièce uniforme, depuis un premier côté du châssis vers son second côté ;
**en ce que** la pièce de fixation (5) est fixée à une poutre, placée en partie supérieure d'elle, aux parties de pièce de fixation s'étendant au-delà des surfaces latérales d'une poutre, au-dessous de la pièce de fixation (5) ;
**en ce que** la pièce de fixation (5) est fixée à la poutre située au-dessus d'elle, au niveau des parties de pièce de fixation s'étendant au-delà des surfaces latérales de la poutre en partie supérieure de la pièce de fixation (5) ;
et **en ce que** la pièce de fixation (5) est fixée à la poutre en partie supérieure de celle-ci sur les deux côtés de la poutre, au-dessous de la pièce de fixation (5), et, de manière correspondante, la pièce de fixation (5) est fixée séparément à la poutre au-dessous de la pièce (5) sur les deux côtés de la poutre, en partie supérieure de la pièce de fixation, de manière que la pièce de fixation (5) soit fixée aux poutres en une fixation en croix.

2. Un châssis selon la revendication 1, **caractérisé en ce que** la pièce de fixation (5) est fixée sur la poutre formant longeron (1) à l'aide d'au moins deux vis de fixation (8) et **en ce que** la pièce de fixation (5) est fixée à la poutre formant traverse (2) à l'aide d'au moins deux vis de fixation (8).

3. Un châssis selon la revendication 2, **caractérisé en ce que** la poutre formant longeron (1) et la poutre formant traverse (2) sont munies d'une gorge de fixation (11), au moins sur leurs surfaces de jointoiement placées en regard de la pièce de fixation (5), **en ce que** la vis de fixation (8) comprend une pièce conjuguée (12, 15), et **en ce que** la pièce conjuguée (12, 15) est agencée dans ladite gorge de fixation (11).

4. Un châssis selon la revendication 3, **caractérisé en ce que**, du fait de sa forme, la pièce conjuguée (12) de la vis de fixation est verrouillée en place dans la gorge de fixation (11), lorsque la vis de fixation (8) est serrée.

5. Un dispositif de fixation comprenant une pièce de fixation (5) sensiblement analogue à une plaque, agencée entre une poutre supérieure et une poutre inférieure d'un véhicule et placée à l'intersection des poutres, là où la pièce de fixation (5) s'étend au-delà des surfaces latérales des poutres, la pièce de fixation (5) étant fixée de façon indésolidarisable à la poutre supérieure et, de manière correspondante, à la poutre inférieure, **caractérisé en ce que** :
la pièce de fixation (5) est fixée sur la poutre supérieure, au niveau des parties de pièce de fixation s'étendant au-delà des surfaces latérales de la poutre inférieure ;
la pièce de fixation (5) est fixée sur la poutre inférieure, au niveau des parties de pièce de fixation s'étendant au-delà des surfaces latérales de la poutre supérieure ;
et **en ce que** la pièce de fixation (5) est fixée sur la poutre supérieure, sur les deux côtés de la poutre inférieure, et, de manière correspondante, la pièce de fixation (5) est fixée séparément à la poutre inférieure sur les deux côtés de la poutre supérieure, de manière que la fixation, entre la pièce de fixation (5) et la poutre inférieure, se fasse en croix par rapport à la fixation entre la pièce de fixation (5) et la poutre supérieure.

6. Un dispositif de fixation selon la revendication 5, **caractérisé en ce que** la surface de jonction sur la face supérieure de la pièce de fixation (5) est munie d'au moins une saillie devant être agencée contre la surface conjuguée de la poutre supérieure ; **en ce que** la surface de jonction sur la face inférieure de la pièce de fixation (5) est munie d'au moins une saillie devant être agencée contre la surface conjuguée de la poutre inférieure ; et **en ce que** lesdites saillies, se trouvant sur la face supérieure et la face inférieure, sont agencées pour positionner la poutre supérieure et la poutre inférieure, sous une position angulaire prédéterminée par rapport à chaque autre.

7. Une pièce de fixation, permettant à une poutre supérieure et à une poutre inférieure d'une structure de châssis de véhicule d'être reliées ensemble, la pièce de fixation (5) étant une pièce sensiblement analogue à une plaque, devant être agencée entre la poutre supérieure et la poutre inférieure, à l'intersection des poutres agencées à des niveaux différents, et, en outre, la pièce de fixation (5) étant dimensionnée pour s'étendre au-delà des surfaces latérales des poutres (1, 2), à l'intersection, **caractérisée en ce que** les parties de la pièce de fixation (5), qui s'étendent au-delà des surfaces latérales des poutres (1, 2), sont placées en croix par rapport à chaque autre, et les parties sont munies de moyens permettant de fixer la pièce de fixation (5) sur la poutre respective, de manière que la fixation, entre la pièce de fixation (5) et la poutre inférieure, se fasse en croix par rapport à la fixation se faisant entre la pièce de fixation (5) et la poutre supérieure.

8. Une pièce de fixation selon la revendication 7, **caractérisée en ce que** les parties, s'étendant au-delà des surfaces latérales de la poutre supérieure et la poutre inférieure, comprennent des ouvertures (7) pour des vis de fixation (8).

9. Une pièce de fixation selon la revendication 7 ou 8, **caractérisée en ce que**, au moins une surface de jonction de la pièce de fixation (5) est pourvue d'au moins une saillie (16a, 16b), et **en ce que** la saillie peut être placée dans une gorge de fixation (11) ou une cavité similaire, ménagée sur la surface de jonction d'une poutre placée en intersection.

10. Une pièce de fixation selon l'une quelconque des revendications 7 à 9, **caractérisée en ce que** la première surface de jonction de la pièce de fixation (5) est pourvue d'au moins une saillie, **en ce que** la deuxième surface de jonction de la pièce de fixation (5) est munie d'au moins une saillie, et **en ce que** les saillies des première et deuxième surfaces de jonction sont agencées sous une position angulaire prédéterminée par rapport à chaque autre.
